(19) **Europäisches Patentamt**
**European Patent Office**
**Office européen des brevets**

(11) **EP 4 412 010 A1**

(12) **EUROPEAN PATENT APPLICATION**

(43) Date of publication:
**07.08.2024 Bulletin 2024/32**

(51) International Patent Classification (IPC):
*H02B 3/00* (2006.01)     *H02B 13/035* (2006.01)
*H02B 13/055* (2006.01)

(21) Application number: **23155205.0**

(22) Date of filing: **06.02.2023**

(52) Cooperative Patent Classification (CPC):
**H02B 3/00; H02B 13/035; H02B 13/055**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Hitachi Energy Ltd
8050 Zürich (CH)**

(72) Inventors:
• **STRAUMANN, Ulrich
 8404 Winterthur (CH)**
• **GATZSCHE, Michael
 8003 Zurich (CH)**

(74) Representative: **Michalski Hüttermann & Partner
Patentanwälte mbB
Kaistraße 16A
40221 Düsseldorf (DE)**

(54) **METHOD FOR PROVIDING A GAS-INSULATED HIGH VOLTAGE DEVICE WITH INCREASED DIELECTRIC STRENGTH AND GAS-INSULATED HIGH VOLTAGE DEVICE PROVIDED BY SAID METHOD**

(57)     The invention relates to a method for improving the dielectric strength of a gas-insulated high voltage device, the method comprising the steps:
- providing a high voltage device comprising at least one closed compartment being configured to be filled with a gas, at least one solid insulator, and at least one conductor, wherein the solid insulator and/or the conductor are at least partially enclosed by the compartment,
- filling the compartment of the provided high voltage device with a conditioning gas,
- conditioning the filled high voltage device by connecting the conductor to a voltage source and thereby provoking electrical discharges inside the compartment filled with the conditioning gas, and
- providing the gas-insulated high voltage device by replacing the conditioning gas of the conditioned high voltage device with an insulation gas.

Furthermore, the invention relates to a gas-insulated high voltage device obtained by the above method.

Further, the invention relates to a gas-insulated high voltage device having an increased dielectric strength.

**Description**

**Technical Field**

The invention relates to a method for improving the dielectric strength of a gas-insulated high voltage device.
Furthermore, the invention relates to a gas-insulated high voltage device obtained by said method.
Further, the invention relates to a gas-insulated high voltage device having an increased dielectric strength.

**Background Art**

High voltage devices, such as circuit breakers and switchgears are essential for the protection of technical equipment. For example, circuit breakers are predominantly used for interrupting a current, when an electrical fault occurs. As an example, circuit breakers have the task of opening arcing contacts, quench an arc, and keeping the arcing contacts apart from one another in order to avoid a current flow even in case of high electrical potential originating from the electrical fault itself. Circuit breakers may break medium to high short circuit currents of typically 10 kA to 80 kA at high voltages of typically 12 kV to 72 kV and up to 1200 kV. Thus, high voltage devices accommodate high-voltage conductors such as conductors to which a high voltage is applied.
Some high voltage devices, namely gas-insulated high voltage devices, comprise an insulation gas within an enclosure, for example sulphur hexafluoride ($SF_6$), in order to separate and insulate the high-voltage conductor from other parts and in particular to separate and insulate the high-voltage conductor from other conductors and/or the grounded enclosure.
In order to hold the high-voltage conductor firmly inside the device volume, in a position sufficiently far away from the grounded enclosure, solid insulators are typically provided inside the gas enclosure. The insulator may be secured at its outer rim to the enclosure by a flange, and may be configured to accommodate the high-voltage conductor within the enclosure. For example, a gas-insulated transmission line generally includes a hollow cylindrical enclosure, a conductor tube coaxially arranged in the center of the enclosure, fixed by a solid insulator electrically insulating the conductor tube from the enclosure. The solid insulator is disposed inside the enclosure and supports the conductor tube, while the space within the compartment formed by the hollow enclosure is filled with the insulation gas.
The need for insulation and shielding of the conductor provides - depending on the type of insulation gas and the voltage applied to the conductor - a physical lower limit to the size of the gas-insulated high voltage device. For example, $SF_6$ is widely used as insulation gas, as it is known for its inherent high dielectric strength. Thus, the distance of the conductor to the enclosure can be smaller compared to insulation gases having a lower inherent dielectric strength than $SF_6$.
However, $SF_6$ might have some environmental impact when released into the atmosphere, in particular due to its relatively high global warming potential and its relatively long lifetime in the atmosphere. Thus, efforts have been made to substitute $SF_6$ with different more environmentally friendly insulation gases or to reduce the $SF_6$ content in insulation gas mixtures. However, the inherent dielectric strength of substitutes to $SF_6$ may be inferior to that of $SF_6$. Thus, in order to provide sufficient insulation, the distance from the conductor to the enclosure is increased leading to larger gas-insulated high voltage devices and/or the filling pressure of the insulation gas has to be increased, coming along with larger design and burst pressures. The latter has thicker enclosures and barrier insulators as consequence. Both countermeasures, larger devices or design pressures, increase environmental impact and costs of the corresponding devices: The larger gas-insulated high voltage devices come with increased cost, higher hassle for shipping and installation of the high voltage device and larger land use for installation of the high voltage device, which is especially problematic in densely populated areas, such as cities. The alternative countermeasure - i.e. the increase of the density and thus the pressure of the insulation gas - comes with the downside of needing thicker encapsulation, which makes the gas-insulated high voltage device heavier, more expensive and increases the carbon footprint.
Furthermore, the size of gas insulated high voltage devices is also limited by practical manufacturing and shipping considerations: Gas-insulated high voltage devices are typically assembled in factories. Hence, the size of the gas-insulated high voltage device is also practically limited by the size which may be transported and further handled in a practical manner - for example the size of the gas-insulated high voltage device is practically limited by the size of standardized shipping containers, or the width of trucks used for transportation.
The gas insulated high voltage device may comprise one or more functional units, such as bus-ducts, disconnector and earthing switches, instrument transformers or circuit breakers or a combination of all. Due to the logistical constraints gas-insulated high voltage device that are designed for high rated insulation are shipped in transport units consisting of smaller amounts of functional units. For example, in case of rated voltages of 550 kV a gas-insulated switchgear may be shipped to a costumer in multiple parts, wherein every part may consist of a single functional unit of the gas-insulated switchgear. On the other hand, for example in case of rated voltages of 145 kV the transport unit may consist of complete switchgear bays consisting of multiple functional units.

**Summary of invention**

It is an object of the invention to improve the dielectric strength of gas-insulated high voltage devices. It is a further object to increase the voltage range for which the gas-insulated high voltage device is suited and/or decrease the size and/or weight of the gas-insulted high voltage device.

The object of the invention is solved at least in part by the features of the independent claims. Modified embodiments are detailed in the dependent claims.

Thus, the object is solved by a method for improving the dielectric strength of a gas-insulated high voltage device, the method comprising the steps:

- providing a high voltage device comprising at least one closed compartment being configured to be filled with a gas, at least one solid insulator, and at least one conductor, wherein the solid insulator and/or the conductor are at least partially enclosed by the compartment,
- filling the compartment of the provided high voltage device with a conditioning gas,
- conditioning the filled high voltage device by connecting the conductor to a voltage source and thereby provoking electrical discharges inside the compartment filled with the conditioning gas, and
- providing the gas-insulated high voltage device by replacing the conditioning gas of the conditioned high voltage device with an insulation gas.

The object is also solved at least in part by a gas-insulated high voltage device obtained by the above method.

Further, the object is solved at least in part by a gas-insulated high voltage device comprising at least one closed compartment being filled with an insulation gas, at least one solid insulator, and at least one conductor, wherein the solid insulator and/or the conductor are at least partially enclosed by the compartment, wherein

a) the conductor comprises on its surface root-points of electrical discharges, wherein the root-points have diameters of at least 100 $\mu$m; and/or

b) the high voltage device is

i) a single-phase encapsulated gas-insulated high voltage device, has a rated lightning impulse withstand voltage $u_p$ and a minimum functional pressure $p_{eqSF6}$ in SF$_6$ equivalent units, and wherein an outer radius of a flange carrying a main solid insulator is smaller than 90% of $\frac{u_p}{1425\,kV} \cdot 580\,mm \cdot \left(\frac{4\,bar}{p_{eqSF6}}\right)^{0.75}$ or an outer diameter of the enclosure of bus-ducts is smaller than $90\% \frac{u_p}{1425\,kV} \cdot 440\,mm \cdot \left(\frac{4\,bar}{p_{eqSF6}}\right)^{0.75}$ ; or

ii) a three-phase encapsulated gas-insulated high voltage device, has a rated lightning impulse withstand voltage $u_p$ and a minimum functional pressure $p_{eqSF6}$ in SF$_6$ equivalent units, and wherein an outer radius of a flange carrying a main solid insulator is smaller than 90% of $\frac{u_p}{650\,kV} \cdot 540\,mm \cdot \left(\frac{5\,bar}{p_{eqSF6}}\right)^{0.75}$ or an outer diameter of the enclosure of bus-ducts is smaller than $90\% \frac{u_p}{650\,kV} \cdot 450\,mm \cdot \left(\frac{5\,bar}{p_{eqSF6}}\right)^{0.75}$ .

In the context of this application the term "inherent dielectric strength $E_{crit}$" is used for a material - e.g. the insulation gas - to describe the maximum electric field that the material can withstand under ideal conditions without undergoing electrical breakdown and becoming electrically conductive. With $E_{crit}$ the electric field is meant, which results in equal rates of generation (ionisation rate) and attachment of free electrons (attachment rate), as described in "Moving Towards Carbon-Neutral High-Voltage Switchgear by Combining Eco-Efficient Technologies, Michael Gatzsche et al., A3, PS2, 10656, Cigré Session 2022, Paris, France, 2022". Data regarding ionization and attachment coefficients for various gases are available to the person skilled in the art in various databases such as the Plasma Data Exchange Project LXCat. The term "dielectric strength" is used for a gas-insulated high voltage device having a specific arrangement of the conductor within the grounded enclosure, to describe the minimum applied electric field that results in breakdown for the specific geometry of the high voltage device.

Furthermore, in the context of this application a gas-insulated high voltage device is a high voltage device having gaseous insulation beyond dry air at atmospheric pressure. In other words, either the gaseous insulation consists of dry air at pressures higher than atmospheric pressure or the gaseous insulation consists of a medium different from dry air. Typically, the gaseous insulation of a gas insulated high voltage device consists of a mixture of $CO_2/O_2$ at pressures higher than atmospheric pressure or of a gaseous mixtures having a higher dielectric performance than dry air either at atmospheric pressure or at pressures higher than atmospheric pressure.

Moreover, in the context of this invention high voltage means voltages of above 1 kV. Preferably the gas-insulated high voltage device according to the present invention is suited for transmission and in particular subtransmission voltage level. In the context of this invention subtransmission voltage level means voltage of at least 52 kV to voltages of not more than 245 kV. Furthermore, transmission voltage level means voltage higher than 245 kV, and preferably voltages up to 420 kV.

Furthermore, in the context of this applications pressures of the conditioning gas or pressures of the insulation gas are absolute pressures.

One aspect of the invention is the conditioning step of the high voltage device by provoking electrical discharges inside the compartment filled with the conditioning gas before the filling of the compartment with the insulation gas. It was found that the conditioning increases the performance of the gas-insulated high voltage device and in particular the dielectric strength of the gas-insulated high voltage device. Thus, it is possible to provide gas-insulated high voltage devices suited for a higher voltage level or gas-insulated high voltage devices having smaller sizes and/or lower weight than without conditioning.

A further aspect of the invention is thus, that i) for a single-phase high voltage device, the outer radius of the flange carrying the main solid insulator is smaller than 90% of $\dfrac{u_{\mathrm{p}}}{1425\,\mathrm{kV}} \cdot 580\,\mathrm{mm} \cdot \left(\dfrac{4\,\mathrm{bar}}{p_{\mathrm{eqSF6}}}\right)^{0.75}$ or that the outer diameter of the enclosure of the bus-ducts is smaller than $90\%\,\dfrac{u_{\mathrm{p}}}{1425\,\mathrm{kV}} \cdot 440\,\mathrm{mm} \cdot \left(\dfrac{4\,\mathrm{bar}}{p_{\mathrm{eqSF6}}}\right)^{0.75}$ ; or that ii) for a three-phase high voltage device, the outer radius of the flange carrying the main solid insulator is smaller than 90%

of $\dfrac{u_{\mathrm{p}}}{650\,\mathrm{kV}} \cdot 540\,\mathrm{mm} \cdot \left(\dfrac{5\,\mathrm{bar}}{p_{\mathrm{eqSF6}}}\right)^{0.75}$ or that the outer diameter of the enclosure of the bus-ducts is smaller than

$90\%\,\dfrac{u_{\mathrm{p}}}{650\,\mathrm{kV}} \cdot 450\,\mathrm{mm} \cdot \left(\dfrac{5\,\mathrm{bar}}{p_{\mathrm{eqSF6}}}\right)^{0.75}$ .

Preferably, the high voltage device is even smaller particular preferably for the single-phase high voltage device, the outer radius of the flange carrying the main solid insulator is smaller than 80% of

$\dfrac{u_{\mathrm{p}}}{1425\,\mathrm{kV}} \cdot 580\,\mathrm{mm} \cdot \left(\dfrac{4\,\mathrm{bar}}{p_{\mathrm{eqSF6}}}\right)^{0.75}$ or the outer diameter of the enclosure of the bus-ducts is smaller than

$80\%\,\dfrac{u_{\mathrm{p}}}{1425\,\mathrm{kV}} \cdot 440\,\mathrm{mm} \cdot \left(\dfrac{4\,\mathrm{bar}}{p_{\mathrm{eqSF6}}}\right)^{0.75}$ ; or for the three-phase high voltage device, the outer radius of the flange carrying the main solid insulator is smaller than 80% of $\dfrac{u_{\mathrm{p}}}{650\,\mathrm{kV}} \cdot 540\,\mathrm{mm} \cdot \left(\dfrac{5\,\mathrm{bar}}{p_{\mathrm{eqSF6}}}\right)^{0.75}$ or the outer diameter of the enclosure of the bus-ducts is smaller than $80\%\,\dfrac{u_{\mathrm{p}}}{650\,\mathrm{kV}} \cdot 450\,\mathrm{mm} \cdot \left(\dfrac{5\,\mathrm{bar}}{p_{\mathrm{eqSF6}}}\right)^{0.75}$ .

Alternatively or additionally a high voltage device is provided wherein the conductor of the high voltage device comprises on its surface root-points of electrical discharges, wherein the root-points have diameters of at least 100 μm.

Further preferably the high voltage device is obtained by the method for improving the dielectric strength of a gas-insulated high voltage device as described above.

The rated lightning impulse withstand voltage $u_{\mathrm{p}}$ is preferably determined by the skilled person by performing impulse voltage tests described in the standards used in the technical field for the specific type of high voltage device, preferably by performing impulse voltage tests, according to IEC standards or IEEE standards. In order to compare the dielectric strength of gas-insulated high voltage devices having different insulation gases, the minimum functional pressures in the above formula are given as minimum functional pressures in $SF_6$ equivalent units $p_{eqSF6}$. The $SF_6$ equivalent pressure is the filling pressure of the gas-insulated high voltage device for the situation that the insulation gas consists of $SF_6$, achieving the same inherent dielectric strength $E_{crit}$ as the gaseous insulation in question. In other words, for a gas-insulated high voltage device having an insulation gas consisting of $SF_6$ the $SF_6$ equivalent filling pressure is the same as the actual filling pressure of the gas-insulated high voltage device. However, for a gas-insulated high voltage device having an insulation gas different from $SF_6$ and being inferior to $SF_6$ with regard to its theoretic dielectric strength, the $SF_6$ equivalent filling pressure is lower than the actual filling pressure of the high gas-insulated high voltage device. Furthermore, the minimum functional pressure is the pressure of the insulation gas at which the gas insulated high voltage device still performs its dedicated function. Preferably, the minimum functional pressure is determined by the skilled person by performing tests described in the standards used in the technical field for the specific type of high voltage device, preferably by performing tests procedures according to IEC standards or IEEE standards.

The main solid insulator of the gas-insulated high voltage device preferably comprises a circular form, is disc shaped, and/or - in case the gas-insulated high voltage device is a three-phase encapsulated high voltage device - is a symmetric triangle arrangement. Further preferably the main solid insulator is secured at its outer rim to the enclosure by the flange, and further preferably for a single-phase gas-insulated high voltage device configured to accommodate the conductor in its centre and further preferably for a three-phase gas-insulated high voltage device configured to accommodate the conductor in the centre of the triangle in the centre of the disc.

Without being bound to a specific theory, it is believed that the conditioning may affect the surface quality of the conductor, eliminating dust and/or small particles and thereby increasing the dielectric strength of the gas-insulated high voltage device. The technical advantage of the high voltage device having received the conditioning step may be, that the surface irregularity at the conductor is significantly reduced compared to a high voltage device not having received the condition step. This significantly improved surface quality results in a higher dielectric strength of the high voltage device.

That means, using the same geometric arrangement and the same manufacturing processes - except for the conditioning - the gas-insulated high voltage device according to the invention can be subjected to higher dielectric stresses than a gas-insulated high voltage device not having received the conditioning step, without dielectric failure. Hence, the gas-insulated high voltage device according to the invention can be used for a higher rated voltage, or insulated with an insulation gas having a lower inherent dielectric strength than the insulation gas used for the gas-insulated high voltage device not having received the conditioning step, or insulated with the insulation gas at lower pressure than the insulation gas used for the gas-insulated high voltage device not having received the conditioning step.

Furthermore, it is further possible to provide a gas-insulated high voltage device for a specific voltage rating and having a specific insulation gas having a smaller size as a gas-insulated high voltage device for the same specific voltage rating and having the same specific insulation gas at the same pressure and not having received the conditioning.

According to a preferred embodiment of the invention, a method is provided, wherein a pressure of the conditioning gas for conditioning is lower than a filling pressure of the insulation gas of the provided gas-insulated high voltage device. Preferably the filling pressure of the provided gas-insulated high voltage device is a rated filling pressure - i.e. the filling pressure of the gas-insulated high voltage device used in order to achieve the insulation properties needed for the voltage it is used for. It was found that damage to the solid insulator can be averted when the conditioning step is performed with a filling pressure of the conditioning gas being lower than the filling pressure of the insulation gas. Provoking electrical discharges inside the solid insulator instead of the conditioning gas could lead to permanent physical and chemical changes along the path of the discharge at the surface of the solid insulator and would reduce the dielectric strength of this gaseous-solid interface of the solid insulator.

According to a further preferred embodiment the filling pressure of the insulation gas of the provided gas-insulated high voltage device is above atmospheric pressure. Typical filling pressures of the provided high voltage device are around a couple of 100 kPa, e.g., 400 kPa, 600 kPa or 900 kPa.

In connection to this and according to a further preferred embodiment of the invention, the pressure of the conditioning gas for conditioning is less than 40%, preferably less than 20% and even more preferably less than 10% of a rated filling pressure of the insulation gas of the provided gas-insulated high voltage device. The rated filling pressure is the pressure, to which the gas insulated high voltage device is filled before being put into service, or automatically replenished. The rated filling pressure is preferably determined by the skilled person by performing test procedures described in the standards used in the technical field for the specific type of high voltage device, preferably by performing test procedures according to IEC standards or IEEE standards. The rated filling pressure is preferably a pressure value lying between the boundaries of the minimum functional pressure and the design pressure defined by the standards. The minimum functional pressure is preferably the pressure of the insulation gas at which the gas insulated high voltage device still performs its dedicated function. The design pressure is preferably the pressure of the insulation gas for which the pressure relief of the gas insulated high voltage device is designed. Preferably and depending on the specific type of high voltage device, the relevant standards are of the series IEC 62271, such as IEC 62271-1:2017 for general requirements, or for equipment specific requirements IEC 62271-100 for switchgear and controlgear and/or for alternating-current circuit-breakers, IEC 62271-102 for alternating current disconnectors and earthing switches, IEC 62271-203 for gas insulated switchgear, and IEC 62271-205 for compact switchgear assemblies. Further preferred standards are for example IEEE C37.06, or IEEE C37.100.1, depending on the specific type of the high voltage device. It was found that such pressures for the conditioning gas makes it possible to increase the dielectric strength of the gas-insulated high voltage device significantly in a reasonable time needed for the conditioning, without having the risk to damage the solid insulator. Furthermore, it was found that conditioning results are not as good at larger pressures of the conditioning gas, in particular for a conductor consisting of aluminum or comprising aluminum.

According to another preferred embodiment the pressure of the conditioning gas for conditioning is more than 0.1%, preferably more than 0.5% and even more preferably more than 3% of the rated filling pressure of the insulation gas of the provided gas-insulated high voltage device. Having a filling pressure of the conditioning gas below these values, unnecessarily prolongs the conditioning step at may make it economically unfeasible. For example, the filling pressure of the conditioning gas for conditioning may be 5% of the rated filling pressure of the insulation gas.

For a typical high voltage device, it is preferred that the pressure of the conditioning gas for conditioning is equal to or less than 300 kPa, preferably equal to or less than 100 kPa and even more preferably equal to or less than 50 kPa. Further preferably the pressure of the conditioning gas for conditioning is preferably equal to or more than 1 kPa, preferably equal to or more than 5 kPa and even more preferably equal to or more than 25 kPa.

According to another preferred embodiment of the invention a method is provided the step of providing the gas-insulated high voltage device by replacing the conditioning gas with the insulation gas comprises evacuating the compartment of the conditioned high voltage device and filling the evacuated compartment with insulation gas. It is preferred to not only add insulation gas to the compartment of the conditioned high voltage device in order to bring up the pressure inside the compartment to the desired filling pressure of the gas-insulated high voltage device, but to evacuate the compartment of the conditioning gas and to refill the compartment with the insulation gas. This makes it possible to use different kind of gases or gas mixtures as conditioning gas and insulation gas.

In this regard it is possible that the conditioning gas is the same type of gas or gas mixture as the insulation gas. It is however also possible that the conditioning gas is a different type of gas or gas mixture as the insulation gas.

According to another preferred embodiment of the invention, the conditioning gas is the same type of gas or gas mixture as the insulation gas, and the step of providing the gas-insulated high voltage device by replacing the conditioning gas with the insulation gas preferably comprises evacuating the compartment of the conditioned high voltage device and filling the evacuated compartment with conditioning gas not being inside the compartment during conditioning of the high voltage device.

According to a preferred alternative embodiment of the invention, the conditioning gas is not the same type of gas or gas mixture as the insulation gas, and the step of providing the gas-insulated high voltage device by replacing the conditioning gas with the insulation gas preferably comprises evacuating the compartment of the conditioned high voltage device and filling the evacuated compartment with insulation gas.

In connection to this step and according to another preferred embodiment the step of providing the gas-insulated high voltage device by replacing the conditioning gas with the insulation gas preferably comprises filtering the insulation gas before filling the evacuated compartment with filtered insulation gas or - in case the conditioning gas is the same type of gas as the insulation gas - filtering condition gas not being inside the compartment during conditioning of the high voltage device before filling the evacuated compartment with the filtered conditioning gas. It was found that filling the conditioned compartment with unfiltered insulation gas (or in case the conditioning gas is the same type of gas as the insulation gas unfiltered conditioning gas) may negatively affect the effects of conditioning.

In this connection and according to another preferred embodiment filtering the insulation gas and/or conditioning gas comprises filtering the insulation gas and/or condition gas with a filter such that the average particle size of the filtered insulation gas and/or the filtered conditioning gas is equal or less than 100 $\mu$m, preferably equal to or less than 50 $\mu$m, and even more preferably equal to or less than 10 $\mu$m.

According to another preferred embodiment of the invention the conditioning gas is selected from the group consisting of dry air, $CO_2$, mixtures comprising $CO_2$, mixtures comprising fluoroketones, mixtures comprising fluoronitriles, mixtures of $CO_2$ with a carrier gas, mixtures of fluoroketones and/or fluoronitriles with a carrier gas, mixtures consisting of $N_2$ and $O_2$, mixtures consisting of $CO_2$ and $O_2$, mixtures consisting of fluoroketones, $N_2$ and $O_2$, mixtures consisting of fluoronitriles, $N_2$ and $O_2$, mixtures consisting of fluoroketones, $CO_2$ and $O_2$, mixtures consisting of fluoronitriles, $CO_2$ and $O_2$. The carrier gas for use with $CO_2$, fluoroketones and/or fluoronitriles may comprise dry air, $N_2$, $O_2$, $CO_2$, and mixtures thereof. Further preferably the conditioning gas may have a reduced fluorine content compared to $SF_6$ or may even be fluorine free.

According to another preferred embodiment of the invention, the insulation gas is selected from the group consisting of dry air, $CO_2$, mixtures comprising $CO_2$, mixtures comprising fluoroketones, mixtures comprising fluoronitriles, mixtures of $CO_2$ with a carrier gas, mixtures of fluoroketones and/or fluoronitriles with a carrier gas, mixtures consisting of $N_2$ and $O_2$, mixtures consisting of $CO_2$ and $O_2$, mixtures consisting of fluoroketones, $N_2$ and $O_2$, mixtures

consisting of fluoronitriles, $N_2$ and $O_2$, mixtures consisting of fluoroketones, $CO_2$ and $O_2$, mixtures consisting of fluoronitriles, $CO_2$ and $O_2$. The carrier gas for use with $CO_2$, fluoroketones and/or fluoronitriles may comprise dry air, $N_2$, $O_2$, $CO_2$, and mixtures thereof. Further preferably the insulation gas may have a reduced fluorine content compared to $SF_6$ or may even be fluorine free.

A preferred fluoroketone is $CF_3C(O)CF(CF_3)_2$, which is preferably used with $CO_2$, $N_2$, $CO_2/O_2$ mixtures, and/or with $N_2/O_2$ mixtures. A preferred fluoronitrile is *iso*-$C_3F_7CN$, which is preferably used with $CO_2$, $N_2$, $CO_2/O_2$ mixtures, and/or with $N_2/O_2$ mixtures. Particularly preferred, the conditioning gas and the insulation gas are the same type of gas or gas mixtures, and further preferably are selected from the group consisting of dry air, mixtures comprising fluoroketones, mixtures comprising fluoronitriles, mixtures consisting of $N_2$ and $O_2$, mixtures consisting of $CO_2$ and $O_2$, mixtures consisting of fluoroketones, $N_2$ and $O_2$, mixtures consisting of fluoronitriles, $N_2$ and $O_2$, mixtures consisting of fluoroketones, $CO_2$ and $O_2$, mixtures consisting of fluoronitriles, $CO_2$ and $O_2$. The ratio of $N_2$ to $O_2$ in the $N_2/O_2$ mixture is preferably 90 Vol% to 10 Vol%, 85 Vol% to 15 Vol%, 80 Vol% to 20 Vol%.

With regard to the conditioning step and according to another preferred embodiment of the invention, a method is provided, wherein the step of conditioning the high voltage device comprises provoking corona discharges inside the compartment filled with the conditioning gas and/or provoking an electric spark and/or arc inside the compartment filled with the conditioning gas.

A corona discharge is type of electrical discharge caused by the ionization of the conditioning gas surrounding the conductor carrying the voltage. The corona represents a region where the condition gas has undergone a local electrical breakdown and become conductive, allowing charge to continuously leak off the conductor into the conditioning gas, but without crossing the whole insulation and without ending in a disruptive discharge. Provoking a corona discharge has the advantage that the conditioning allows for a parallel processing of the conductor system, as the occurrence of corona is typically not limited to a local spot at the conductor surface but may appear simultaneously at any defect or surface irregularity across the whole conductor or generally a macroscopic surface or electrode system. However, conditioning time might be prolonged by the lower impact from corona discharges onto single defects or surface irregularity on the surface of the conductor.

An electric spark is a type of electrical discharge being characterized by an abrupt electrical discharge that occurs when a sufficiently high electric field creates an ionized, electrically conductive channel through the conditioning gas. Hence, the insulation system breaks down by a disruptive discharge. The spark is created when the applied electric field exceeds the dielectric breakdown strength of the high voltage device at a specific point. Once dielectric breakdown occurs, current flow is limited by the available charge or by the impedance of an external power supply. If the power supply continues to supply current, the spark will evolve into a continuous discharge called an electric arc. Conditioning by breakdown-spark or arc erosion has the advantage that the impact of the spark or arc on the surface of the conductor is increased and thus significant improvements of the dielectric strength of the gas-insulated high voltage device can be achieved. However, conditioning time might be prolonged as the spark and/or arc only affect local surface areas of the conductor.

According to another preferred embodiment of the invention, the step of conditioning the high voltage device comprises connecting the conductor to a voltage source providing a voltage with a peak value of 1% to 50% of the rated lightning impulse withstand voltage of the provided gas-insulated high voltage device. The rated lightning impulse withstand voltage is preferably determined by the skilled person by performing impulse voltage tests described in the standards used in the technical field for the specific type of high voltage device, preferably by performing impulse voltage tests, according to IEC standards or IEEE standards. This is particularly preferred in connection with the filling pressure of the conditioning gas being less than 50% of the rated filling pressure of the insulation gas of the provided gas-insulated high voltage device. It was found that the corona discharge conditioning and/or electric spark and/or arc conditioning can be achieved by these parameters without negatively affecting the solid insulator of the high voltage device.

Method according to any of the previous claims, wherein the step of conditioning the high voltage device comprises connecting the conductor to an AC or DC voltage source over a limiting impedance. The limiting impedance has the advantage that the AC or DC voltage source can run continuously, irrespective of the electrical breakdown at the source side. Furthermore, the limiting impedance prevents tripping of the voltage in the voltage source, while discharges happen in the high voltage device. Further, the limiting impedance limits the current that the insulation may restore with at rate to insulate the recovery voltage after the breakdown. Further, it was found that the limiting impedance improves the effects of conditioning. It is believed that the limiting impedance limits the currents in the spark impacting the surface to be conditioned on the root-point of the discharge such that surface irregularities can be removed. Having a too large current in the spark impacting the surface, the surface irregularity may not be removed or the root-point of the spark itself may cause a greater surface irregularity.

The limiting impedance is preferably dependent on the pressure of the conditioning gas for conditioning. Further preferably the limiting impedance is at least 10 kOhm for spark and/or arc conditioning and further preferably at least 1 MOhm. This has the advantage that a low discharge current results from the voltage source, which ends in current breaking, after the transient discharge of the stray capacitance of the device under conditioning. As consequence, the spark discharges are limited to short, pulse-like discharges, without requiring the voltage source to be restarted or disconnected. Hence, the voltage source may stay being energized during the conditioning spark discharges in the device under conditioning. The limiting impedance for corona discharge conditioning is of lower relevance, unless it is combined with spark discharge conditioning in a later phase of conditioning.

Further preferably, as already mentioned the voltage source may be an AC or DC voltage source. Furthermore, for spark conditioning the voltage is preferably a DC voltage source as this enables usage of larger limiting impedances.

According to another preferred embodiment of the invention, the step of conditioning the high voltage device comprises performing a voltage ramp from a starting voltage value to a final voltage value. This makes it possible to start with a low voltage and successively increase the voltage, and thus diminishes the risk that the solid insulator is damaged by the conditioning. Furthermore, the voltage ramp makes it possible that the high voltage device is first conditioned by corona conditioning and only surface irregularities, which are not removed by coronal conditioning, will go into spark and/or arc conditioning, when the voltage will reach breakdown levels during the ramping. The voltage ramp is preferably a ramp having a constant rate.

In this regard and according to another preferred embodiment of the invention, the final voltage value $u_{\mathrm{ca}}$ is determined by

$$u_{\mathrm{ca}} = u_{\mathrm{p}} \cdot \left(\frac{E_{\mathrm{crit}}(cg)}{E_{\mathrm{crit}}(ig)}\right)^{0.75},$$

with $E_{\mathrm{crit}}(x)$ being the inherent strength of a gas $x$, with $ig$ denoting the insulation gas at a minimum functional pressure of the high voltage device, $cg$ the conditioning gas at a filling pressure of the high voltage device for conditioning, and $u_{\mathrm{p}}$ being the peak value of a rated lightning impulse withstand voltage, according to the relevant standard in the field, preferably according to IEC standards or IEEE standards.

The inherent strength $E_{\mathrm{crit}}(x)$ of the gas $x$ is the electric stress at which electron generation rate by ionization of molecules of the gas is equal to attachment of free electrons in the gas. In case the insulation gas and the conditioning gas are the same gas or the same type of gas mixture the above formula for the final voltage value $u_{\mathrm{ca}}$ can be rewritten as:

$$u_{\mathrm{ca}} = u_{\mathrm{p}} \cdot \left(\frac{p_{\mathrm{fill}}(g)}{p_{\mathrm{min}}(g)}\right)^{0.75},$$

with $p_{min}$ being the minimum functional pressure of the insulation gas or the conditioning gas respectively, and $p_{fill}$ being the filling pressure of the insulation gas or the conditioning gas respectively. It has been found that with such a value for the final voltage the risk for damaging the solid insulator is diminished, and the conditioning time is not unnecessarily prolonged.

According to another preferred embodiment of the invention, the starting voltage is equal to or less than 20% of the final voltage value. This has shown to be sufficiently low to start the conditioning step.

With regard to the conditioning time and according to another preferred embodiment of the invention the step of conditioning the high voltage device comprises provoking the electrical discharges inside the compartment filled with the conditioning gas until electrical breakdowns generated by the conditioning stop to occur for at least 1 minute. In other words, the conditioning is performed as long as electrical breakdowns inside the compartment occur.

According to another preferred embodiment of the invention, a method is provided, wherein the conductor of the provided high voltage device is free of a dielectric coating. It has been found that conditioning is not feasible for conductors having dielectric coatings, as the dielectric coating may negatively affected the provocation of the electrical discharges inside the compartment and/or the dielectric coating may be negatively affected by the provoked electrical discharges.

According to another preferred embodiment the provided high voltage device preferably comprises a gas-insulated switchgear, a live tank breaker, a dead tank breaker, a circuit breaker, a voltage instrument transformer, a current instrument transformer, a gas-insulated transmission line, a bushing and/or a mixed technology switchgear. It has been found that the method for improving the dielectric strength can be applied to these types of high voltage devices.

According to another preferred embodiment a method is provided wherein the method comprises the step of performing a gas tightness test before filling the compartment of the high voltage device with the conditioning gas. The gas tightness test is an easy way to decide if the compartment of the high voltage device has the required gas tightness needed for the gas-insulated high voltage device.

In this regard and further preferably the gas tightness test is performed by filling the compartment of the provided high voltage device with helium up to the rated filling pressure.

Further preferably the method further comprises the step of performing a mechanical operation test before filling the compartment of the high voltage device with the conditioning gas. This is particularly preferred for high voltage devices comprising switches.

According to another preferred embodiment of the invention, the method comprises the step of performing routing tests in particular performing a dielectric test after providing the gas-insulated high voltage device. Before the gas-insulated high voltage device is delivered to a customer, it is preferably shown that the required insulation capability is reached by performing the dielectric test, preferably on the main circuit of the gas-insulated high voltage device.

As already mentioned, the invention is also directed to the gas-insulated high voltage device obtained by the above-described method. The gas-insulated high voltage device obtained by the above method has an increased dielectric strength, compared to a gas-insulated high voltage device not being subjected to the conditioning step.

Furthermore, the invention is also directed to the gas-insulated high voltage device comprising at least one closed compartment being filled with an insulation gas, at least one solid insulator, and at least one conductor, wherein the solid insulator and/or the conductor are at least partially enclosed by the compartment, wherein

i) the high voltage device is a single-phase encapsulated gas-insulated high voltage device, has a rated lightning impulse withstand voltage $u_\mathrm{p}$ and a minimum functional pressure $p_\mathrm{eqSF6}$ in $SF_6$ equivalent units, and wherein the outer radius of the flange carrying the main solid insulator is smaller than 90% of

$$\frac{u_\mathrm{p}}{1425\,\mathrm{kV}} \cdot 580\,\mathrm{mm} \cdot \left(\frac{4\,\mathrm{bar}}{p_\mathrm{eqSF6}}\right)^{0.75}$$

or the outer diameter of the enclosure of bus-ducts is smaller than

$$90\% \frac{u_\mathrm{p}}{1425\,\mathrm{kV}} \cdot 440\,\mathrm{mm} \cdot \left(\frac{4\,\mathrm{bar}}{p_\mathrm{eqSF6}}\right)^{0.75}$$ ; or

ii) the high voltage device is a three-phase encapsulated gas-insulated high voltage device, has a rated lightning impulse withstand voltage $u_\mathrm{p}$ and a minimum functional pressure $p_\mathrm{eqSF6}$ in $SF_6$ equivalent units, and wherein the outer radius of the flange carrying the main solid insulator is smaller than 90% of

$$\frac{u_\mathrm{p}}{650\,\mathrm{kV}} \cdot 540\,\mathrm{mm} \cdot \left(\frac{5\,\mathrm{bar}}{p_\mathrm{eqSF6}}\right)^{0.75}$$

or the outer diameter of the enclosure of bus-ducts is smaller than

$$90\% \frac{u_\mathrm{p}}{650\,\mathrm{kV}} \cdot 450\,\mathrm{mm} \cdot \left(\frac{5\,\mathrm{bar}}{p_\mathrm{eqSF6}}\right)^{0.75}.$$

As already mentioned, the increased dielectric strength makes it possible to obtain gas-insulated high voltage devices having lower sizes.

Furthermore, the invention is also directed to the gas-insulated high voltage device comprising at least one closed compartment being filled with an insulation gas, at least one solid insulator, and at least one conductor, wherein the solid insulator and/or the conductor are at least partially enclosed by the compartment, wherein the conductor comprises on its surface root-points of electrical discharges, wherein the root-points have diameters of at least 100 $\mu$m.

The conditioning of the high voltage device preferably leads to microscopic crater-like structures on the surface of the conductor having diameters of 100 $\mu$m to preferably 1000 $\mu$m, the latter being feasible with lower pressures of the conditioning gas during conditioning. Such root-points are preferably detectible by light microscopy of the surface of the conductor. Furthermore, the surface of the conductor may comprise eroded protrusions. For example, in case the surface of the conductor had a scratch and thereby a protrusion e.g. from manufacturing of the conductor, such a protrusion would erode during conditioning and be visible under the light microscope as eroded protrusion, having less sharp edges and corners. The same applies to more filamentary defects that would erode during conditioning and be visible under the light microscope or under the electron-microscope as eroded filamentary defects. Particular preferably the conductor comprises on its surface at least two root-points having a diameter of at least 100 $\mu$m per square meter, more preferably at least three root-points having a diameter of at least 100 $\mu$m per square meter and even more preferably at least five root-points having a diameter of at least 100 $\mu$m per square meter.

Furthermore, the conductor of the gas-insulated high voltage device is preferably free of a dielectric coating.

With regard to the gas-insulated high voltage device, it is further preferred that the gas insulated high voltage device is configured as a gas-insulated switchgear, a live tank breaker, a dead tank breaker, a circuit breaker, a voltage instrument transformer, a current instrument transformer, a gas-insulated transmission line, a bushing and/or a mixed technology switchgear.

Particularly preferred in case the gas-insulated high voltage device is realized according to feature i) or ii) the gas insulated high voltage device is configured as a gas-insulated switchgear, a dead tank breaker, a circuit breaker, a voltage instrument transformer, a current instrument transformer, a gas-insulated transmission line, a bushing and/or a mixed technology switchgear

Further preferably the gas-insulated high voltage device comprises a rated voltage of at least 1 kV, preferably of at least 52 kV and further preferably of at least 72.5 kV. Further preferably the gas-insulated high voltage device comprises a rated voltage of below 550 kV, preferably below 420 kV and further preferably below 245 kV.

Other aspects and advantages of the high voltage device are directly and unambiguously derived by the person skilled in the art from the description of the method for improving the dielectric strength of a gas-insulated high voltage device and the figure description.

The described and further aspects of the invention will also be apparent from and elucidated with reference to the embodiment described hereinafter.

**Description of embodiment**

In the following a method for improving the dielectric strength of a gas-insulated high voltage device according to a preferred embodiment of the invention is described by ways of example for a subtransmission gas-insulted switchgear (GIS).

Before the GIS comprising at least one closed compartment being configured to be filled with a gas, at least one solid insulator, and at least one conductor, wherein the solid insulator and/or the conductor are at least partially enclosed by the compartment, is delivered to a customer site, the GIS undergoes several preparation steps in the factory, among others:

- Gas tightness of the compartments is tested;
- Mechanical operation of the GIS is tested;
- Dielectric tests on the main circuit are performed to proof required insulation capability of the GIS.

Also, after being shipped to the customer the GIS undergoes several preparation steps on customer site, among others:

- Assembly of the assemblies to the final installation;
- Gas-handling (filling to filling pressure);
- Start of operation

In the specific embodiment of the invention the dielectric strength of the GIS is improved by performing the method for improving the dielectric strength after the gas tightness of the compartments is tested and before the dielectric test on the main circuit is performed.

In particular after the gas-tightness test, where the compartment is filled with helium, and for the method for improving the dielectric strength the compartment is evacuated and filled with a conditioning gas. In a further step the GIS is conditioned by connecting the conductor to a voltage source and thereby provoking electrical discharges inside the compartment filled with the conditioning gas. Afterwards, the conditioning gas inside the compartment of the conditioned GIS is replaced with an insulation gas.

The following table 1 describes on the left the steps performed according to the specific embodiment of the invention including the method for improving the dielectric strength. On the right the steps performed according to a comparative example without a conditioning step are described. The comparative example refers to a GIS having the same design as the GIS used in the preferred embodiment of the invention.

| Table 1: Steps of method according to the specific embodiment of the invention and comparison with method according to comparative example | | |
| --- | --- | --- |
| | Preferred embodiment according to invention (with conditioning) | Comparative example (without conditioning) |
| Step | | |
| assembly of several separate subtransmission GIS bays | Ambient air 1 bar abs | Ambient air 1 bar abs |

(continued)

| Table 1: Steps of method according to the specific embodiment of the invention and comparison with method according to comparative example | | |
|---|---|---|
| | Preferred embodiment according to invention (with conditioning) | Comparative example (without conditioning) |
| Step | | |
| gas tightness of each bay is tested separately | Helium 8 bar abs | Helium 8 bar abs |
| mechanical operation is tested | dry air 8 bar abs | dry air 8 bar abs |
| conditioning | See specific description below | - |
| dielectric tests on the main circuit of each bay | Dry air 7 bar abs according to 145 kV rating (i.e. 50 Hz voltage 275 kV RMS) acc. IEC 62271-203 | Dry air 7 bar abs according to 123 kV rating (i.e. 50 Hz voltage 230 kV RMS) acc. IEC 62271-203 |
| shipment to customer site | dry air 1.5 bar abs | dry air 1.5 bar abs |
| coupling of the separate GIS bays to the final GIS installation | dry air 8 bar abs | dry air 8 bar abs |
| gas-handling (filling to filling pressure) | dry air 8 bar abs | dry air 8 bar abs |
| commissioning tests | Dry air 8 bar abs according to 145 kV rating (i.e. 50 Hz voltage 235 kV RMS) acc. IEC 62271-203 | Dry air 8 bar abs according according to 123 kV rating (i.e. 50 Hz voltage 200 kV RMS) acc. IEC 62271-203 |
| start of operation | Dry air 8 bar abs according to 145 kV rating (i.e. 50 Hz voltage 84 kV RMS phase to ground) acc. IEC 62271-203 | Dry air 8 bar abs according to 123 kV rating (i.e. 50 Hz voltage 71 kV RMS phase to ground) acc. IEC 62271-203 |

With regard to the condition, the conditioning is performed by connecting the assembly to a high voltage DC source over a limiting impedance of 20 MOhm (at 50 Hz). The pressure of the conditioning gas for the conditioning step is 0.5 bar abs, the conditioning gas is dry air. The conditioning voltage is ramped at constant rate between 20% and 100% of 90 kV, with a ramp of 10 minutes. The 90 kV voltage was determined according to $u_{\mathrm{ca}} = u_{\mathrm{p}} \cdot \left(\frac{p_{\mathrm{fill}}(g)}{p_{\mathrm{min}}(g)}\right)^{0.75}$, with $u_{\mathrm{p}}$ = 650 kV according to IEC 62271-203, and with $p_{min}$ being the minimum functional pressure - i.e. 7 bar - and $p_{fill}$ being the filling pressure during conditioning - i.e. 0.5 bar: $u_{ca}$ = 90 kV = $650\,\mathrm{kV} \cdot \left(\frac{0.5\,\mathrm{bar}}{7\,\mathrm{bar}}\right)^{0.75}$ . The voltage amplitude is maintained, until conditioning break-downs stop to occur at least for 1 minute.

As can be seen by reference to the comparative embodiment, the design as well as the assembly of the bays are identical for the embodiment according to the invention and the comparative embodiment. However, due to the conditioning step, the dielectric strength of the GIS is increased compared to the comparative example and the design-wise identical GIS can be used for 145 kV rating instead of 123 kV rating.

While the invention has been illustrated and described in detail in the foregoing description and specific embodiment, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosed, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

**Claims**

1. Method for improving the dielectric strength of a gas-insulated high voltage device, the method comprising the steps:

   - providing a high voltage device comprising at least one closed compartment being configured to be filled with a gas, at least one solid insulator, and at least one conductor, wherein the solid insulator and/or the conductor are at least partially enclosed by the compartment,
   - filling the compartment of the provided high voltage device with a conditioning gas,
   - conditioning the filled high voltage device by connecting the conductor to a voltage source and thereby provoking electrical discharges inside the compartment filled with the conditioning gas, and
   - providing the gas-insulated high voltage device by replacing the conditioning gas of the conditioned high voltage device with an insulation gas.

2. Method according to the previous claim, wherein a pressure of the conditioning gas for conditioning is lower than a filling pressure of the insulation gas of the provided gas-insulated high voltage device, and/or
   wherein a filling pressure of the insulation gas of the provided gas-insulated high voltage device is above atmospheric pressure.

3. Method according to any of the previous claims, wherein a pressure of the conditioning gas for conditioning is less than 40%, preferably less than 20% and even more preferably less than 10% of a rated filling pressure of the insulation gas of the provided gas-insulated high voltage device, and/or
   wherein a pressure of the conditioning gas for conditioning is more than 0.1%, preferably more than 0.5% and even more preferably more than 3% of a rated filling pressure of the insulation gas of the provided gas-insulated high voltage device.

4. Method according to any of the previous claims, wherein a pressure of the conditioning gas for conditioning is equal to or less than 300 kPa, preferably equal to or less than 100 kPa and even more preferably equal to or less than 50 kPa, and/or
   wherein a pressure of the conditioning gas for conditioning is equal to or more than 1 kPa, preferably equal to or more than 5 kPa and even more preferably equal to or more than 25 kPa.

5. Method according to any of the previous claims, wherein the conditioning gas is the same type of gas or gas mixture as the insulation gas, and wherein the step of providing the gas-insulated high voltage device by replacing the conditioning gas with the insulation gas comprises evacuating the compartment of the conditioned high voltage device and filling the evacuated compartment with conditioning gas not being inside the compartment during conditioning of the high voltage device; or
   wherein the conditioning gas is not the same type of gas or gas mixture as the insulation gas, and wherein the step of providing the gas-insulated high voltage device by replacing the conditioning gas with the insulation gas comprises evacuating the compartment of the conditioned high voltage device and filling the evacuated compartment with insulation gas.

6. Method according to any of the previous claims, wherein the conditioning gas is selected from the group consisting of dry air, $CO_2$, mixtures comprising $CO_2$, mixtures comprising fluoroketones, mixtures comprising fluoronitriles, mixtures of $CO_2$ with a carrier gas, mixtures of fluoroketones and/or fluoronitriles with a carrier gas, mixtures consisting of $N_2$ and $O_2$, mixtures consisting of $CO_2$ and $O_2$, mixtures consisting of fluoroketones, $N_2$ and $O_2$, mixtures consisting of fluoronitriles, $N_2$ and $O_2$, mixtures consisting of fluoroketones, $CO_2$ and $O_2$, mixtures consisting of fluoronitriles, $CO_2$ and $O_2$, and/or
   wherein the insulation gas is selected from the group consisting of dry air, $CO_2$, mixtures comprising $CO_2$, mixtures comprising fluoroketones, mixtures comprising fluoronitriles, mixtures of $CO_2$ with a carrier gas, mixtures of fluoroketones and/or fluoronitriles with a carrier gas, mixtures consisting of $N_2$ and $O_2$, mixtures consisting of $CO_2$ and $O_2$, mixtures consisting of fluoroketones, $N_2$ and $O_2$, mixtures consisting of fluoronitriles, $N_2$ and $O_2$, mixtures consisting of fluoroketones, $CO_2$ and $O_2$, mixtures consisting of fluoronitriles, $CO_2$ and $O_2$.

7. Method according to any of the previous claims, wherein the step of conditioning the high voltage device comprises provoking corona discharges inside the compartment filled with the conditioning gas and/or provoking an electric spark and/or arc inside the compartment filled with the conditioning gas.

8. Method according to any of the previous claims, wherein the step of conditioning the high voltage device comprises connecting the conductor to a voltage source providing a voltage with a peak value of 1 % to 50 % of the rated lightning impulse withstand voltage of the provided gas-insulated high voltage device.

9. Method according to any of the previous claims, wherein the step of conditioning the high voltage device comprises connecting the conductor to an AC or DC voltage source over a limiting impedance, wherein the limiting impedance is preferably at least 10 kOhm and further preferably at least 1 MOhm.

10. Method according to any of the previous claims, wherein the step of conditioning the high voltage device comprises performing a voltage ramp from a starting voltage value to a final voltage value.

11. Method according to any of the previous claims, wherein the step of conditioning the high voltage device comprises provoking the electrical discharges inside the compartment filled with the conditioning gas until electrical breakdowns generated by the conditioning stop to occur for at least 1 minute.

12. Method according to any of the previous claims, wherein the conductor of the provided high voltage device is free of a dielectric coating.

13. Gas-insulated high voltage device comprising at least one closed compartment being filled with an insulation gas, at least one solid insulator, and at least one conductor, wherein the solid insulator and/or the conductor are at least partially enclosed by the compartment, wherein

  a) the conductor comprises on its surface root-points of electrical discharges, wherein the root-points have diameters of at least 100 $\mu$m; and/or
  b) the high voltage device is

   i) a single-phase encapsulated gas-insulated high voltage device, has a rated lightning impulse withstand voltage $u_\mathrm{p}$ and a minimum functional pressure $p_\mathrm{eqSF6}$ in $SF_6$ equivalent units, and wherein an outer radius of a flange carrying a main solid insulator is smaller than 90% of $\frac{u_\mathrm{p}}{1425\,\mathrm{kV}} \cdot 580\,\mathrm{mm} \cdot \left(\frac{4\,\mathrm{bar}}{p_\mathrm{eqSF6}}\right)^{0.75}$
   or an outer diameter of the enclosure of bus-ducts is smaller than

$90\% \frac{u_\mathrm{p}}{1425\,\mathrm{kV}} \cdot 440\,\mathrm{mm} \cdot \left(\frac{4\,\mathrm{bar}}{p_\mathrm{eqSF6}}\right)^{0.75}$ ; or

   ii) a three-phase encapsulated gas-insulated high voltage device, has a rated lightning impulse withstand voltage $u_\mathrm{p}$ and a minimum functional pressure $p_\mathrm{eqSF6}$ in $SF_6$ equivalent units, and wherein an outer radius of a flange carrying a main solid insulator is smaller than 90% of $\frac{u_\mathrm{p}}{650\,\mathrm{kV}} \cdot 540\,\mathrm{mm} \cdot \left(\frac{5\,\mathrm{bar}}{p_\mathrm{eqSF6}}\right)^{0.75}$
   or an outer diameter of the enclosure of bus-ducts is smaller than

$90\% \frac{u_\mathrm{p}}{650\,\mathrm{kV}} \cdot 450\,\mathrm{mm} \cdot \left(\frac{5\,\mathrm{bar}}{p_\mathrm{eqSF6}}\right)^{0.75}$ .

14. Gas-insulated high voltage device according to the previous claim, wherein the gas insulated high voltage device is configured as a gas-insulated switchgear, a live tank breaker, a dead tank breaker, a circuit breaker, a voltage instrument transformer, a current instrument transformer, a gas-insulated transmission line, a bushing and/or a mixed technology switchgear.

15. Gas-insulated high voltage device according to any of the two previous claims, wherein the gas-insulated high voltage device is obtained by the method according to any of claims 1 to 12.

Europäisches
Patentamt

European
Patent Office

Office européen
des brevets

# EUROPEAN SEARCH REPORT

**Application Number**

EP 23 15 5205

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | "IEEE Guide for Field Testing of Gas-Insulated Substations Rated Above 52 kV ; IEEE Std C37.122.7-2021", IEEE STANDARD, IEEE, PISCATAWAY, NJ USA , 5 August 2021 (2021-08-05), pages 1-38, XP068184364, DOI: 10.1109/IEEESTD.2021.9508918 ISBN: 978-1-5044-7708-6 Retrieved from the Internet: URL:https://ieeexplore.ieee.org/document/9 508918 [retrieved on 2021-08-06] * page 27 * | 1-15 | INV. H02B3/00 H02B13/035 H02B13/055 |
| A | NITTA T ET AL: "Area Effect of Electrical Breakdown in Compressed SF6", IEEE TRANSACTIONS ON POWER APPARATUS AND SYSTEMS,, vol. 82, no. 2, 1 March 1974 (1974-03-01), pages 623-629, XP011161365, ISSN: 0018-9510 * page 623, right-hand column * * page 625, left-hand column * * page 626, right-hand column * | 1,7-10 | |
| X A | JP 2013 258811 A (EXSYM CORP) 26 December 2013 (2013-12-26) * paragraphs [0008], [0011], [0014], [0015]; figures * | 13,14 1 | TECHNICAL FIELDS SEARCHED (IPC) H02B H01H |
| X A | US 4 029 892 A (NAKATA ROY) 14 June 1977 (1977-06-14) * line 15 – column 2, line 24 * * column 3, line 10 – line 19; figure 1 * | 13,14 1 | |

The present search report has been drawn up for all claims

| Place of search | Date of completion of the search | Examiner |
|---|---|---|
| The Hague | 12 July 2023 | Starck, Thierry |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 15 5205**

This annex lists the patent family members relating to the patent documents cited in the above-mentioned European search report.
The members are as contained in the European Patent Office EDP file on
The European Patent Office is in no way liable for these particulars which are merely given for the purpose of information.

**12-07-2023**

| Patent document cited in search report | | Publication date | Patent family member(s) | | Publication date |
|---|---|---|---|---|---|
| JP 2013258811 | A | 26-12-2013 | JP | 5486641 B2 | 07-05-2014 |
|  |  |  | JP | 2013258811 A | 26-12-2013 |
| US 4029892 | A | 14-06-1977 | BR | 7608031 A | 08-11-1977 |
|  |  |  | CA | 1063198 A | 25-09-1979 |
|  |  |  | DE | 2652609 A1 | 08-06-1977 |
|  |  |  | FR | 2333368 A1 | 24-06-1977 |
|  |  |  | JP | S5276689 A | 28-06-1977 |
|  |  |  | JP | S5953775 B2 | 26-12-1984 |
|  |  |  | US | 4029892 A | 14-06-1977 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MICHAEL GATZSCHE et al.** Moving Towards Carbon-Neutral High-Voltage Switchgear by Combining Eco-Efficient Technologies. *A3, PS2, 10656, Cigré Session 2022, Paris, France,* 2022